# EUROPEAN PATENT APPLICATION

(11) **EP 4 664 961 A1**
(43) Date of publication of application: **17.12.2025**
(21) Application number: 23920422.5
(22) Date of filing: 09.02.2023
(51) Int. Cl.: H04W 16/18

(54) **INFORMATION PROCESSING METHOD AND APPARATUS**

(71) Applicant: FUJITSU LIMITED, Kawasaki-shi, Kanagawa 211-8588 (JP)
(72) Inventor: YI, Su, Beijing 100022 (CN); ZHANG, Lei, Beijing 100022 (CN)
(74) Representative: Haseltine Lake Kempner LLP
(86) International application number: PCT/CN2023/075126
(87) International publication number: WO 2024/164214

(57) **Abstract**

Embodiments of the present disclosure provide an information processing method and apparatus, the method including: an IAB (integrated access and backhaul)-node receives BAP (backhaul adaptation protocol) configuration information; the IAB-node uses the BAP configuration information in topology of an IAB-donor-CU (IAB donor central unit) generating the BAP configuration information if the BAP configuration information is configured to be setup or if the BAP configuration information includes a BAP address. Thereby, problems such as BAP address configuration, BAP address use, BAP routing, and BAP address configuration of a parent node are solved for an IAB-node in a case of inter-CU topology adaptation or topology redundancy, so as to be able to support cross-topology data transmission of the IAB-node and improve network performance.

## Description

### TECHNICAL FIELD

The present disclosure relates to the communication field.

### BACKGROUND

Integrated access and backhaul (IAB) implements a radio relay function in a next generation radio access network (NG-RAN). This relay node is called an IAB-node, and supports both access and backhaul (BH) via 5G new radio (NR). All IAB-nodes are connected to an IAB-donor node via one or more hops. These multi-hop connections form a Directed Acyclic Graph (DAG) topological structure which takes the IAB-donor node as a root node. The IAB-donor node is responsible for performing centralized resource management, topology management and routing management in an IAB network topology.

The IAB-node supports functions of a gNB, which is called an IAB-DU (distributed unit), and which may serve a common user equipment (UE) and an IAB child node. The IAB-node also supports some functions of the UE and may be called an IAB-MT (mobile termination). The IAB-MT may support functions such as a UE physical layer, an access stratum (AS), radio resource control (RRC) and non-access stratum (NAS), and may be connected to an IAB parent node. Terminating node at a network side is called an IAB-donor, which provides network access for the IAB-MT or UE via a backhaul or access link. The IAB-donor is further divided into an IAB-donor-CU (central unit) and an IAB-donor-DU. The IAB-DU and the IAB-donor-CU are connected via an F1 interface. In a standalone scenario, the gNB and the IAB-donor-CU are connected via an Xn interface.

To support multi-hop routing forwarding of a packet, the IAB introduces a Backhaul Adaptation Protocol (BAP) sublayer. The BAP sublayer is above a radio link control (RLC) sublayer and below an Internet Protocol (IP) layer, and supports functions such as selection of a packet destination node and a path, routing forwarding of the packet, bearer mapping, flow control feedback, and backhaul link failure notification, etc.

In a multi-hop scenario, in order to realize relay forwarding of a packet, an IAB-node needs to determine a destination node to which the packet reaches, and then determines a corresponding next-hop node reaching to the destination node according to a routing table and transmits the packet. In the above scenario, the IAB-donor-CU, via F1AP (F1 application protocol) signaling, configures the IAB-node with mapping from each F1-U tunnel, each non-UE associated F1AP message, each UE-associated F1AP message and each non-F1 data (traffic) to a BAP routing identity, for uplink transmission initiated by the IAB-node. The IAB-node determines BAP routing identities corresponding to different types of uplink IP packets initiated from the IAB-node according to routing identity mapping information, and encapsulates BAP subheaders containing BAP routing identity information for these uplink IP packets. IAB-donor-CU (donor-CU, or CU, or gNB-CU for short) configures the IAB-donor-DU with mapping from different types of downlink packets to a BAP routing identity via the F1AP signaling. The IAB-donor-DU (donor-DU for short) determines BAP routing identities corresponding to the received downlink IP packets according to the routing identity mapping information, and encapsulates BAP subheaders containing BAP routing identity information for these downlink IP packets.

The BAP routing identity includes a destination BAP address and a path identity from the IAB-node to the IAB-donor-DU. The BAP address is also called a DESTINATION in a BAP header. Each IAB-node and IAB-donor-DU are configured with a BAP address.

When the IAB-node is started (integration), RRC may configure a default BH RLC channel and a default BAP routing identity for non-F1-U (F1 interface user plane) traffic. These configurations may be updated in a topology adaptation scenario.

The IAB-node may have redundant paths to different IAB-donor-CUs. For an IAB-node that works in a stand-alone (SA) mode, it is allowed that the IAB-MT has a backhaul link with two parent nodes respectively via NR-DC (New Radio-Dual Connectivity), so as to achieve route redundancy of backhaul. The two parent nodes may be connected to different IAB-donor-CUs, these IAB-donor-CUs may control establishment and release of redundant routes passing through the two parent nodes. The IAB-DU function of the parent nodes and the corresponding IAB-donor-CUs acquire roles of a master node and/or a secondary node of the IAB-MT. Framework of the NR-DC, such as MCG/SCG (master cell group/secondary cell group) related processes, is used to configure dual-radio connectivity from the IAB-node to the parent node.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

Inventor finds that in a topology redundancy scenario of an IAB network or a partial migration scenario, problems such as configuration and routing exist in topology adaptation and topology redundancy between donors.

For the above problems or similar problems or similar problems in other scenarios, the embodiments of the present disclosure provide an information processing method and apparatus.

According to an aspect of the embodiments of the present disclosure, an information processing apparatus is provided, configured in an IAB-node in an IAB network, the apparatus comprising:
a receiving unit configured to receive BAP configuration information; and
a processing unit configured to use the BAP configuration information in topology of an IAB-donor-CU generating the BAP configuration information if the BAP configuration information is configured to be setup or if the BAP configuration information includes a BAP address.

According to another aspect of the embodiments of the present disclosure, an information processing apparatus is provided, configured in an IAB-node in an IAB network, the apparatus comprising:
a processing unit configured to release a BAP address and/or an IP address when the IAB-node completes handover.

According to a further aspect of the embodiments of the present disclosure, an information processing apparatus for a node is provided, configured in a descendant IAB-node of a boundary IAB-node in an IAB network, the apparatus comprising:
a processing unit configured to select an IP address for to-be-offloaded uplink traffic, the IP address satisfying the following conditions that:
the IP address is anchored at an IAB-donor-DU whose BAP address is contained in the BAP routing identity of the uplink mapping for the uplink traffic; and
the IP address is configured by an F1-terminating IAB-donor-CU, and the F1-terminating IAB-donor-CU obtains the IP address from a non-F1-terminating IAB-donor-CU.

According to a further embodiments of the present disclosure, an information processing apparatus is provided, configured in a second IAB-donor node in an IAB network, the apparatus comprising:
a processing unit configured to provide the same egress BAP routing identity for all to-be-offloaded uplink traffics when the second IAB-donor node responds the egress BAP routing identity to a first IAB-donor node, whose uplink backhaul mapping received from the first IAB-donor node in an IAB transport migration management request message share the same ingress BAP routing identity.

One of advantageous effects of the embodiments of the present disclosure lies in that: according to the embodiments of the present disclosure, a topology adaptation function between donors in the IAB network is enhanced.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of an example of an inter-donor topology redundancy network structure;
FIG. 2 is a schematic diagram of a partial migration scenario;
FIG. 3 is a schematic diagram of an information processing method in the embodiments of the present disclosure;
FIG. 4 is a schematic diagram of BAP address configuration and use in a partial migration scenario;
FIG. 5 is a schematic diagram of a consecutive multiple partial migrations scenario;
FIG. 6 is another schematic diagram of an information processing method in the embodiments of the present disclosure;
FIG. 7 is a further schematic diagram of an information processing method in the embodiments of the present disclosure;
FIG. 8 is a schematic diagram of IP address configuration of a descendant IAB-node;
FIG. 9 is another schematic diagram of an information processing method in the embodiments of the present disclosure;
FIG. 10 is a schematic diagram of an information processing apparatus in the embodiments of the present disclosure;
FIG. 11 is another schematic diagram of an information processing apparatus in the embodiments of the present disclosure;
FIG. 12 is a further schematic diagram of an information processing apparatus in the embodiments of the present disclosure;
FIG. 13 is another schematic diagram of an information processing apparatus in the embodiments of the present disclosure;
FIG. 14 is a schematic diagram of an IAB-node in the embodiments of the present disclosure;
FIG. 15 is a schematic diagram of an IAB-donor node in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Scenarios and concepts involved in the embodiments of the present disclosure are simply described below with reference to the drawings.

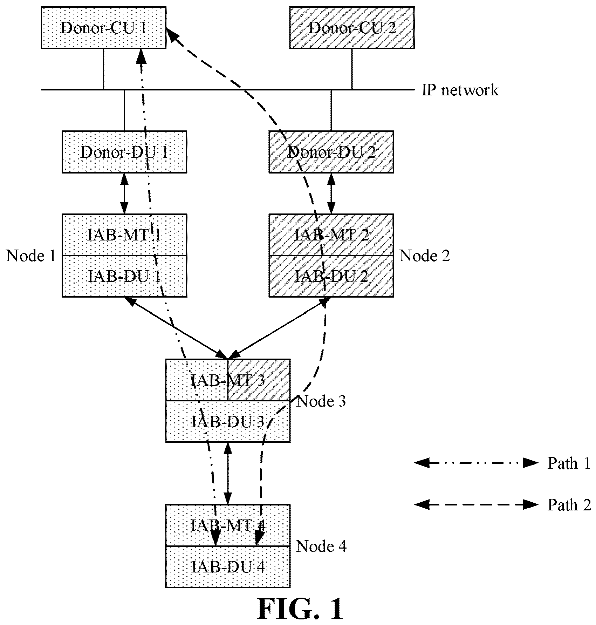

FIG. 1 is a schematic diagram of an example of an inter-donor topology redundancy network structure. As shown in FIG. 1, node 3 is called a boundary IAB-node. The boundary IAB-node refers to that an RRC interface and F1 interface thereof are terminated to different IAB-donor-CUs. The boundary IAB-node is applicable to partial migration, inter-donor topology redundancy, and inter-donor radio link failure (RLF) recovery. For example, in FIG. 1, DU of node 3 (IAB-DU 3) is terminated to donor-CU 1, and MT of node 3 (IAB-MT 3) has interfaces for both donor-CU 1 and donor-CU 2, thus conforming to the definition of a boundary IAB-node.

Descendant IAB-node is a node that accesses to a network via the boundary IAB-node, such as node 4 shown in FIG. 1.

F1-terminating node refers to a donor-CU that terminates F1 interfaces of a boundary IAB-node and a descendant IAB-node, such as donor-CU 1 shown in FIG. 1. In FIG. 1, F1 interfaces of both IAB-DU 3 (boundary IAB-node) and IAB-DU 4 (descendant IAB-node) are terminated to donor-CU 1, thus donor-CU 1 conforms to the definition of the F1-terminating node.

Non-F1-terminating node refers to a donor-CU that does not terminate F1 interfaces of a boundary IAB-node and a descendant IAB-node, such as donor-CU 2 shown in FIG. 1.

In the topology redundancy scenario shown in FIG. 1, the boundary IAB-node is a dual-connectivity node.

In the embodiments of the present disclosure, IAB-MT may be migrated to a parent node under a different IAB-donor-CU. In this situation, collocated IAB-DU and IAB-DU of the descendant node maintain F1 connections with an original IAB-donor-CU. This migration is called inter-donor partial migration. This IAB-node with IAB-MT migrated to a new IAB-donor-CU is a boundary IAB-node. After the inter-donor partial migration, F1 traffic from the IAB-DU and the descendant node are routed via a BAP layer of an IAB topology to which the IAB-MT is migrated.

In the embodiments of the present disclosure, the SA mode supports the inter-donor partial migration. When an IAB-node in the SA mode declares RLF of a backhaul link, it may perform RLF recovery at parent nodes under different IAB-donor-CUs. Same as the inter-donor partial migration, collocated IAB-DU and IAB-DU of the descendant node maintain F1 connections with an original IAB-donor-CU.

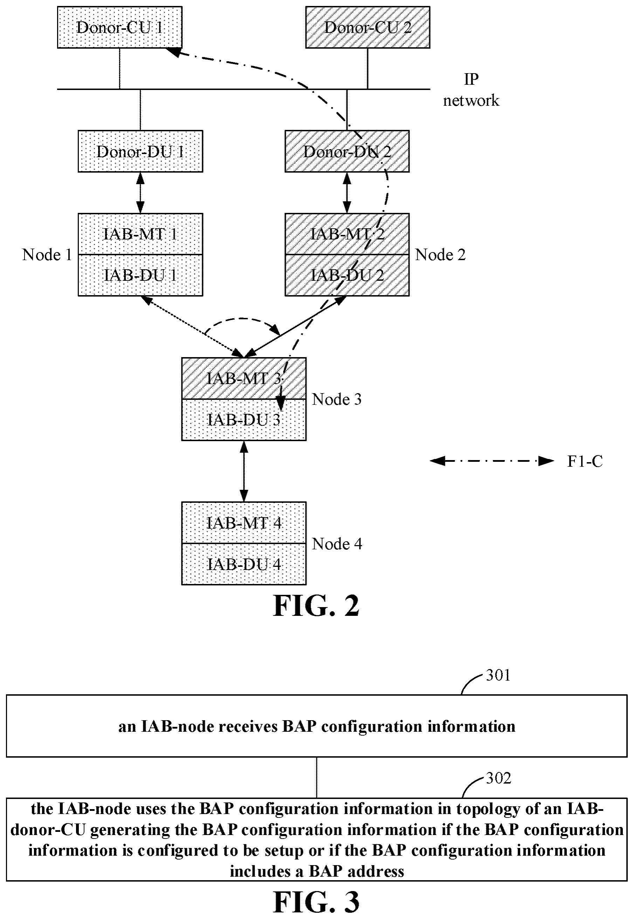

FIG. 2 is a schematic diagram of a partial migration scenario. As shown in FIG. 2, IAB-node 3 is a boundary IAB-node, and IAB-MT 3 changes from single connection to a parent node (node 1) to single connection to a parent node (node 2). Both IAB-DU 3 and its child node (node 4) still have the F1 connections with donor-CU 1, but a path through which the F1 connection passes finally reaches to donor-CU 1 via node 2.

In the partial migration scenario in FIG. 2, the boundary IAB-node is a migrating node. The partial migration scenario also applies to partial RLF recovery.

Scenarios of the embodiments of the present disclosure include 5G multi-hop IAB network deployment. Namely, multiple UEs are connected to an IAB-donor via multi-hop IAB-nodes and finally access to a 5G network.

In the embodiments of the present disclosure, IAB topology refers to a set composed of all IAB-nodes and IAB-donor-DUs that are connected by backhaul links and whose F1 and/or RRC is/are terminated to the same IAB-donor-CU. In FIG. 1 and FIG. 2, nodes in the donor-CU 1 topology are identified using the same filling mode, and the topology network composed of them is called a first topology; nodes in the donor-CU 2 topology are identified using the same filling mode, they form a second topology. In FIG. 1 and FIG. 2, the boundary IAB-node (node 3) belongs to both topologies.

Various implementations of the present disclosure will be described below with reference to the drawings. These implementations are exemplary only and are not limitations to the present disclosure. In the following description, "if...", "in a case where..." and "when...", etc. have the same meaning, and may be interchangeable.

### Embodiments of a first aspect

Current BAP routing is managed and configured by a donor-CU of its topology. A BAP address of each IAB-node is configured by the donor-CU that manages the IAB-node, via RRC signaling. A boundary IAB-node may have a BAP address in each topology. For example, in the scenario of FIG. 1, BAP addresses of node 1 and node 4 are configured by donor-CU 1, and a BAP address of node 2 is configured by donor-CU 2. Node 3 (boundary IAB-node) may be configured with a BAP address respectively by donor-CU 1 and donor-CU 2, and the two BAP addresses may be the same or may be different. For another example, in the partial migration scenario of FIG. 2, although the MT of the boundary IAB-node (node 3) has migrated to donor-CU 2, and it is also configured with a BAP address by donor-CU 2, whether the boundary IAB-node still needs to retain the original BAP address allocated by donor-CU 1 and how to use multiple BAP addresses have not been specified, resulting in an ambiguity problem of a BAP address.

In addition, when performing cell group configuration for child nodes of the boundary IAB-node (e.g. node 4 in FIG. 1 or FIG. 2), a BAP address of a parent node needs to be contained. Since the boundary IAB-node may have two BAP addresses, configuration of a BAP address of this parent node may cause ambiguity. That is to say, when configuring a parent node for IAB-node 4, which BAP address of the parent node is used needs to be specified.

Similarly, in backhaul routing configuration of node 4, a next-hop BAP address corresponding to some BAP routing identities needs to be a BAP address of the boundary IAB-node (node 3), which is used to indicate an uplink direction path. If the boundary IAB-node has two BAP addresses, which BAP address is used needs to be specified. The reason is that BAP addresses of different topologies have different domains, which may cause conflict, and the use of a wrong BAP address may cause routing failure. That is to say, when the boundary IAB-node receives a BAP data packet heading to an upstream direction that needs to be routed, (a next-hop BAP address) corresponding to one or more BAP route identities in a routing table is unclear. This may cause routing ambiguity, that is, a next-hop BAP address in the routing table is ambiguous, and which node it refers to is not known.

For at least one of the above problems or other similar problems, the embodiments of the present disclosure provide an information processing method, applied to an IAB-node in an IAB network, which may be the aforementioned boundary IAB-node or may be the aforementioned descendant IAB-node, depending on its role in the IAB network.

FIG. 3 is a schematic diagram of an information processing method in the embodiments of the present disclosure. Referring to FIG. 3, the method includes:
301: an IAB-node receives BAP configuration information; and
302: the IAB-node uses the BAP configuration information in topology of an IAB-donor-CU generating the BAP configuration information if the BAP configuration information is configured to be setup or if the BAP configuration information includes a BAP address.

It should be noted that the above FIG. 3 only schematically describes the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 3.

According to the above embodiment, by enhancing a behavior of the IAB-node when receiving the BAP configuration information, problems such as BAP address configuration, BAP address usage, BAP routing and BAP address configuration of a parent node are solved for an IAB-node in a case of inter-CU topology adaptation or topology redundancy, so as to be able to support cross-topology data transmission for the IAB-node and improve network performance.

In some embodiments, said BAP configuration information may be bap-Config IE (information element), and it may be included in an RRC reconfiguration message (RRCReconfiguration). The present disclosure is not limited to this, the BAP configuration information may be other information element, and is carried by other message.

In some embodiments, if bap-Config includes a BAP address (bap-Address), the IAB-node configures this bap-Address as a BAP address used by a BAP entity of the IAB-node. This BAP address is used in topology of an IAB-donor-CU that generates (or transmits) this configuration.

In the above embodiments, the IAB-node may be a boundary IAB-node, i.e., an IAB-node with an RRC interface and an F1 interface terminated to different IAB-donor-CUs.

Examples are given below for illustration.

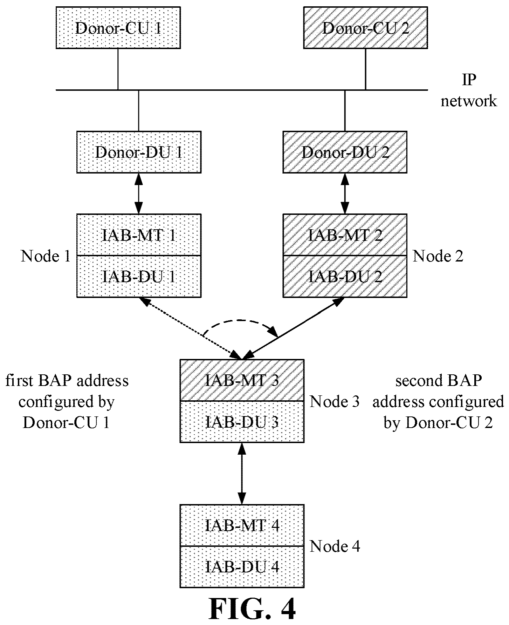

FIG. 4 is a schematic diagram of BAP address configuration and use in a partial migration scenario. As shown in FIG. 4, the boundary IAB-node (node 3) is configured with a first BAP address by Donor-CU 1 (an F1-terminating donor of IAB-node 3) before migration, and after partial migration, Donor-CU 2 is added as a non-F1-terminating donor. Donor-CU 2 configured a second BAP address for the boundary IAB-node (node 3) via RRCReconfiguration.

According to the embodiments of the present disclosure, it is specified that the first BAP address is used in the topology of Donor-CU 1, and the second BAP address is used in the topology of Donor-CU 2. Use of a BAP address includes: BAP routing configuration, selection of a next-hop node when routing a BAP data PDU, i.e., selection of an egress link, configuration of a parent node BAP address of a node, etc. Thereby, ambiguity of a BAP address or routing may be avoided.

The above embodiments take the partial migration scenario as an example. The inter-CU topology redundancy scenario is similar to the partial migration scenario, descriptions are omitted here.

The following table is an example of enhancing the BAP configuration process of TS38.331 according to the method in the above embodiments, that is, the BAP configuration process of TS38.331 may have the following description:

| | | | |
|---|---|---|---|
| The IAB-MT shall: | | | |
| | | | 1> if the *bap-Config* is set to *setup:* |
| | 2> if no BAP entity is established: | | |
| | | 3> establish a BAP entity as specified in TS 38.340 [47]; | |
| | 2> if *bap-address* is included: | | |
| | | 3> configure the BAP entity to use the *bap-Address* as this node's BAP address in the topology pertaining to the IAB-donor-CU who generates this configuration; | |

The above is just an example for illustration. The present disclosure is not limited to this. Other description modes that reflect the inventive concept of the above embodiments are also included in the protection scope of the present disclosure.

In some embodiments, if bap-Config is set to *setup,* the IAB-node uses this bap-Config in topology of an IAB-donor-CU that generates (or transmits) this bap-Config.

In the above embodiments, the IAB-node may be a boundary IAB-node, i.e., an IAB-node with an RRC interface and an F1 interface terminated to different IAB-donor-CUs.

The following table is another example of enhancing the BAP configuration process of TS38.331 according to the method in the above embodiments, that is, the BAP configuration process of TS38.331 may further have the following description:

| | | |
|---|---|---|
| The IAB-MT shall: | | |
| | | 1> if the *bap-Config* is set to *setup:* |
| | 2> consider this configuration as used for the topology pertaining to the IAB-donor-CU who generates this configuration; | |

The above is just an example for illustration. The present disclosure is not limited to this. Other description modes that reflect the inventive concept of the above embodiments are also included in the protection scope of the present disclosure.

In some embodiments, the IAB-node may further receive cell group configuration information, the cell group configuration information including a BAP address. The IAB-node designates the BAP address as a BAP address of a parent node of the IAB-node, and the BAP address is configured by an IAB-donor-CU that configures the cell group.

In the above embodiments, the cell group configuration information may be included in an RRC reconfiguration message. Furthermore, the IAB-node may be a descendant IAB-node, that is, the parent node of the IAB-node may be a boundary IAB-node, i.e., an IAB-node with an RRC interface and an F1 interface terminated to different IAB-donor-CUs.

In the above embodiments, when configuring a field indicating a BAP address (bap-Address in CellGroupConfig IE), the BAP address is designated as a BAP address of the parent node. Thereby, the cell group configuration of the IAB-node can be enhanced to improve the network performance.

The following table is an example of enhancing bap-Address in CellGroupConfig IE of TS38.331 according to the method in the above embodiments, that is, bap-Address in CellGroupConfig IE of TS38.331 may have the following description:

| |
|---|
| ***bap-Address*** |
| BAP address of the parent node in cell group. This BAP address is configured by the same IAB-donor-CU as the one who configures this cell group. |

In some embodiments, the IAB-node may further receive backhaul routing configuration information, the backhaul routing configuration information indicating a BAP address of a next-hop node, the BAP address of the next-hop node being a BAP address used in the same topology as the IAB-node.

In the above embodiments, the backhaul routing configuration information may be included in F1AP signaling. Moreover, the next-hop node may be a boundary IAB-node, i.e., an IAB-node with an RRC interface and an F1 interface terminated to different IAB-donor-CUs.

In the above embodiments, in the backhaul routing configuration of the IAB-node, each entry includes a BAP routing ID and a next-hop BAP address, to define that the next-hop BAP address uses a BAP address belonging to the same topology as its IAB. Thereby, the backhaul routing configuration (F1AP signaling) of the IAB-node can be enhanced to improve the network performance.

The following table is an example of enhancing a BAP MAPPING CONFIGURATION message of TS38.473 according to the method in the above embodiments, that is, the BAP MAPPING CONFIGURATION message of TS38.473 may have the following description:

| **IE/Group Name** | | | **Presence** | **Range** | **IE type and reference** | **Semantics description** |
|---|---|---|---|---|---|---|
| Message Type | | | M | | 9.3.1.1 | |
| Transaction ID | | | M | | 9.3.1.23 | |
| **BH Routing Information Added List** | | | | 0...1 | | |
| | **>BH Routing Information Added List Item** | | | *1*.. *<maxnoofRou tingEntries>* | | |
| | | >>BAP Routing ID | M | | 9.3.1.110 | |
| | | >>Next-Hop BAP Address | M | | 9.3.1.111 | Indicates the BAP address of the next hop IAB-node or IAB-donor-DU. This BAP address is used in the same topology as this IAB node. |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, problems such as BAP address configuration, BAP address usage, BAP routing, and BAP address configuration of a parent node are solved for an IAB-node in a case of inter-CU topology adaptation or topology redundancy, so as to be able to support cross-topology data transmission of the IAB-node and improve network performance.

### Embodiments of a second aspect

In prior arts, revoking may be performed for partial migration. Both an F1-terminating-node and a non-F1-terminating-node may initiate full revoking of traffic offloading. An IAB-MT of a migrating IAB-node (i.e., a boundary IAB-node) is handed over back from a non-F1-terminating IAB-donor-CU (CU 1) to an F1-terminating IAB-donor-CU (CU 2), which is the IAB-donor-CU before partial migration. Traffic of an IAB-DU of the migrating IAB-node is routed via an original path. In such a case, an original boundary IAB-node has no association with CU 2. In this situation, some configurations configured by an original non-F1-terminating donor node via RRC are not necessary, such as bap-Config in an RRCReconfiguration message or bap-Address in bap-Config, and an IP address in IAB Other Configuration, etc. So, how to release these configured BAP addresses and IP addresses needs to be solved. IP addresses may also be called TNL (transport network layer) addresses.

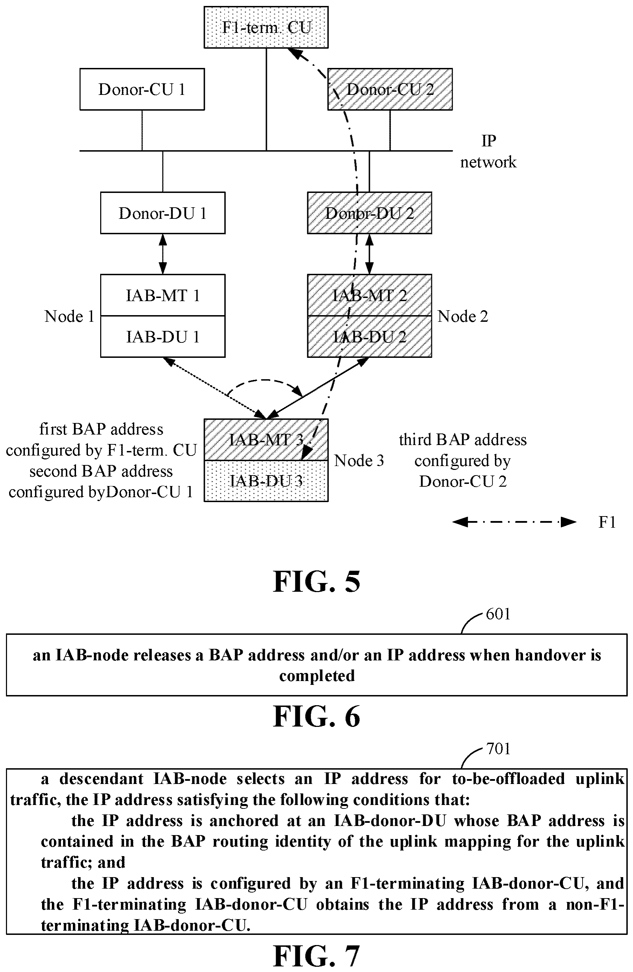

Similarly, if partial migration is performed multiple times consecutively, that is, the F1-terminating donor node of the IAB-node remains unchanged, while the non-F1 -terminating donor node changes for multiple times, as shown in FIG. 5, the IAB-node may be configured with multiple BAP addresses and multiple sets of IP addresses by different donor CUs, these addresses need to be released after migration or handover.

By taking BAP address configuration as an example, in FIG. 5, node 3 is configured with a first BAP address by the F1-terminating donor node (F1-terminating CU) and with a second BAP address by the original non-F1-terminating donor node (Donor-CU 1), and is configured with a third BAP address by Donor-CU 2 after continuing partial migration to Donor-CU 2 (a new non-F1-terminating donor node). In this scenario, the second BAP address should be released; otherwise, incorrect use of the address may be caused.

For at least one of the above problems or other similar problems, the embodiments of the present disclosure provide an information processing method, applied to an IAB-node in an IAB network, which may be the aforementioned migrating IAB-node (boundary IAB-node), however the present disclosure is not limited to this, it may further be other IAB-node in the IAB network.

FIG. 6 is a schematic diagram of an information processing method in the embodiments of the present disclosure. Referring to FIG. 6, the method includes:
601: an IAB-node releases a BAP address and/or an IP address when handover is completed.

According to the above embodiment, an IAB-node releases a BAP address and/or an IP address when handover is completed, which solves a release problem of address configuration after partial migration or consecutive multiple partial migrations.

In some embodiments, that an IAB-node releases a BAP address and/or an IP address when handover is completed may be: the IAB-node receives BAP configuration information, and if the BAP configuration information is caused by handover from a non-F1-terminating IAB-donor-CU, the IAB-node releases a BAP address configured by a source IAB-donor-CU.

In the above embodiments, the release problem of address configuration is solved by enhancing behaviors of the IAB-node (such as IAB-MT) after receiving the BAP configuration information.

In the above embodiments, the BAP configuration information may be bap-Config IE (information element), and it may be included in an RRC reconfiguration message (RRCReconfiguration). The present disclosure is not limited to this, the BAP configuration information may be other information element, and is carried by other message.

In the above embodiments, if the bap-Config (or RRCReconfiguration) is caused by handover from a non-F1-terminating IAB-donor-CU, the IAB-node releases a BAP address configured by a source IAB-donor-CU, thereby solving the release problem of address configuration. Here, the source IAB-donor-CU refers to a non-F1-terminating IAB-donor-CU before the IAB-node performs handover. Handover of the IAB-node represents migration of an IAB-MT.

In the above embodiments, if the bap-Config includes a BAP address, that is, a bap-Config IE includes a bap-Address field, the IAB-node may further take this bap-Address as a BAP Address of the IAB-node.

In the above embodiments, the handover may be handover from a non-F1-terminating IAB-donor-CU to an F1-terminating IAB-donor-CU (revoking of partial migration), or may be handover from a non-F1-terminating IAB-donor-CU to another non-F1-terminating IAB-donor-CU (consecutive multiple partial migrations). The present disclosure is not limited to this.

The following table is an example of enhancing the BAP configuration process of TS38.331 according to the method in the above embodiments, that is, the BAP configuration process of TS38.331 may have the following description:

| | | | |
|---|---|---|---|
| The IAB-MT shall: | | | |
| | | | 1> if the *bap-Config* is set to *setup:* |
| | 2> if no BAP entity is established: | | |
| | | 3> establish a BAP entity as specified in TS 38.340 [47]; | |
| | 2> if *bap-address* is included: | | |
| | | 3> configure the BAP entity to use the *bap-Address* as this node's BAP address in the topology pertaining to the IAB-donor-CU who generates this configuration. If this configuration is due to a handover from a non-F1-terminating IAB-donor-CU (to the F1-terminating IAB-donor-CU or another non-F1-terminating IAB-donor-CU), release the BAP address previously configured by the source IAB-donor-CU; | |

In some embodiments, an inter-CU topology adaptation process may be enhanced.

For example, that an IAB-node releases a BAP address and/or an IP address when handover is completed may be: if the IAB-node is handed over from a non-F1-terminating IAB-donor-CU to an F1-terminating IAB-donor-CU, the IAB-node releases a BAP address and/or an IP address configured by the non-F1-terminating IAB-donor-CU.

In the above embodiments, when the migrating IAB-node performs partial migration revoking, it releases one or more BAP addresses and/or one or more IP addresses configured by an original non-F1-terminating IAB-donor-CU. Thereby, the release problem of address configuration is solved.

For another example, that an IAB-node releases a BAP address and/or an IP address when handover is completed may be: if the IAB-node is handed over from a non-F1-terminating IAB-donor-CU to another non-F1-terminating IAB-donor-CU, the IAB-node releases a BAP address and/or an IP address configured by a source IAB-donor-CU.

In the above embodiments, during the migrating IAB-node (IAB-MT) performs consecutive partial migrations, i.e., the IAB-MT is handed over from a non-F1-terminating IAB-donor-CU to another non-F1-terminating IAB-donor-CU, the IAB-node releases one or more BAP addresses and/or one or more IP addresses configured by a source IAB-donor-CU (the non-F1-terminating IAB-donor-CU). Thereby, the release problem of address configuration is solved.

For a further example, that an IAB-node releases a BAP address and/or an IP address when handover is completed may be: it releases one or more BAP configurations (bap-Config) and/or one or more IAB other configurations (IABOtherInformation) configured by an original non-F1-terminating IAB-donor-CU.

In the above embodiments, that an IAB-node releases a BAP address and/or an IP address may be: the IAB-node releases address(es) autonomously, or a donor-CU transmits an RRC message to the IAB-node to trigger release of an address or configuration.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, an IAB-node releases a BAP address and/or an IP address when handover is completed, which solves a release problem of address configuration after partial migration or consecutive multiple partial migrations.

### Embodiments of a third aspect

In the inter-donor topology redundancy scenario in FIG. 1, if uplink traffic offloading is performed for a descendant IAB-node (such as node 4) of a boundary IAB-node, uplink traffic mapping needs to be configured for the descendant IAB-node. That is, an F1-terminating IAB-donor-CU (CU 1) needs to provide updated uplink Backhaul Information for node 4 when establishing inter-donor topology redundancy, for traffic that needs to be offloaded to a non-F1-terminating IAB-donor-CU (CU 2). How to select an IP address of the descendant-IAB-node for to-be-offloaded uplink traffic is not specified. If an IP address that is not anchored to a target IAB-donor-DU is selected, uplink data may be discarded for a security reason when it reaches to the target IAB-donor-DU, thereby causing transmission failure and affecting network performance.

For the above problem or other similar problems, the embodiments of the present disclosure provide an information processing method, applied to a descendant IAB-node of a boundary IAB-node in an IAB network, however the present disclosure is not limited to this, it may further be other IAB-node in the IAB network.

FIG. 7 is a schematic diagram of an information processing method in the embodiments of the present disclosure. As shown in FIG. 7, the method includes:
701: a descendant IAB-node selects an IP address for to-be-offloaded uplink traffic, the IP address satisfying the following conditions that:
the IP address is anchored at an IAB-donor-DU whose BAP address is contained in the BAP routing identity of the uplink mapping for the uplink traffic; and
the IP address is configured by an F1-terminating IAB-donor-CU, and the F1-terminating IAB-donor-CU obtains the IP address from a non-F1-terminating IAB-donor-CU.

According to the above embodiments, when selecting an IP address for to-be-offloaded uplink traffic for a descendant IAB-node of a boundary IAB-node, the following principle is followed: an IP address selected for the uplink traffic is anchored at an IAB-donor-DU whose BAP address is contained in the BAP routing identity of the uplink mapping for the uplink traffic, and the IP address is configured by an F1-terminating IAB-donor-CU, the F1-terminating IAB-donor-CU obtains the IP address from a non-F1-terminating IAB-donor-CU. That is to say, during performing traffic offloading (such as a topology redundancy scenario) for the descendant IAB-node, a target IAB-donor-CU (non-F1-terminating IAB-donor-CU) replies an IAB transport migration management response message to a source IAB-donor-CU (F1-terminating IAB-donor-CU), the message may include a new TNL address (IP address). The source IAB-donor-CU encapsulates an RRCReconfiguration message including the TNL address in a DL RRC MESSAGE TRANSFER message and transmits it to a parent node of the descendant IAB-node, then the parent node forwards the RRCReconfiguration message to the descendant IAB-node. Thereby, the problem of selecting an IP address of the descendant-IAB-node for to-be-offloaded uplink traffic, that is not specified, is solved. To a certain extent, transmission failure is avoided, and network performance is improved.

In the above embodiments, definitions of the boundary IAB-node and the descendant IAB-node are the same as mentioned above, descriptions are omitted here.

The following table is an example of enhancing the inter-CU topology adaptation process of an IAB including a descendant IAB-node in TS38.401 according to the method in the above embodiments, that is, the inter-CU topology adaptation process of an IAB including a descendant IAB-node in TS38.401 may have the following description:

| |
|---|
| The IP address selected by the descendant IAB-node for an offloaded traffic needs to be anchored at the IAB-donor-DU whose BAP address is contained in the BAP routing ID of the UL mapping for this traffic, and obtained in step 7. |

In some embodiments, the F1-terminating IAB-donor node of the descendant IAB-node performs uplink traffic mapping configuration on the descendant IAB-node, the uplink traffic mapping configuration including a BAP routing identity used by each uplink traffic, a BAP address included in the BAP routing identity being a destination address of the uplink traffic.

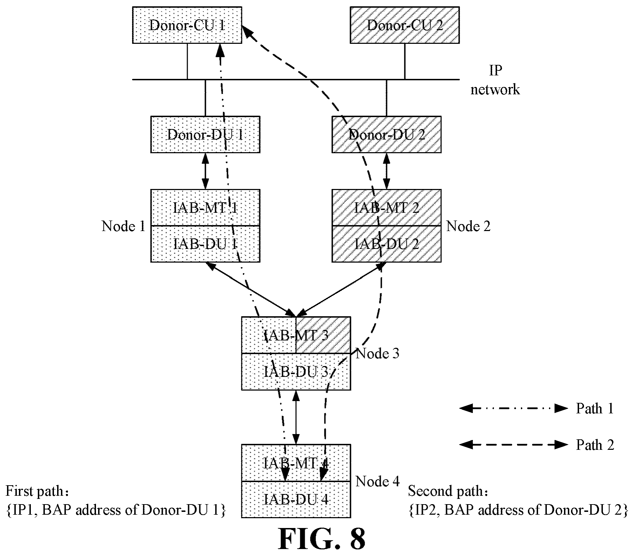

FIG. 8 is a schematic diagram of IP address configuration of a descendant IAB-node, showing a situation in which the IAB-node performs IP address configuration for inter-CU topology redundancy transmission. As shown in FIG. 8, node 4 is configured by Donor-CU 1 with a first IP address and a corresponding BAP address of Donor-DU 1, indicating that the first IP address is anchored at Donor-DU 1. Donor-CU 2 configures a second IP address and a corresponding BAP address of Donor-DU 2 for node 4, indicating that the second IP address is anchored at Donor-DU 2. When Donor-CU 1 performs uplink traffic mapping configuration on node 4 (such as using UL UP TNL Information to Update List Item IE configuration), a BAP routing identity used by each traffic will be configured. The BAP address in the BAP routing identity is a destination address of the uplink traffic, that is, the BAP address of Donor-DU.

For example, if it is desired that a certain uplink traffic uses the first path in FIG. 8, a BAP routing identity with a destination being the BAP address of Donor-DU 1 will be configured for this uplink traffic. When selecting an IP address for this uplink traffic, an IP address anchored at Donor-DU 1, i.e., a first IP address, is selected. That is, an IP address in the pair of {IP, the BAP address of donor-DU} is selected for this uplink traffic, where the BAP address is in the Backhaul Information corresponding to this uplink traffic.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the problem of selecting an IP address of the descendant-IAB-node for to-be-offloaded uplink traffic, that is not specified, is solved. To a certain extent, transmission failure is avoided, and network performance is improved.

### Embodiments of a fourth aspect

In the scenarios of FIG. 1 and FIG. 2, for uplink traffic, Donor-CU 1 provides an ingress BAP routing identity and an ingress BH RLC channel identity to Donor-CU 2; Donor-CU 2 responds an egress BAP routing identity, an egress BH RLC channel identity and a next-hop BAP address to Donor-CU 1. Then, Donor-CU 1, according to information provided by Donor-CU 2, configures a BAP header rewriting configuration and a BH RLC channel mapping configuration for a boundary IAB-node. Since both the BAP header rewriting configuration and the BH RLC channel mapping configuration only support 1:1 and N:1 configurations, how to avoid occurrence of 1:N configuration needs to be specified.

For the above problem or other similar problems, the embodiments of the present disclosure provide an information processing method, applied to a second IAB-donor node in an IAB network, such as Donor-CU 2 in the aforementioned scenarios. In the following embodiments, the first IAB-donor node is, for example, Donor-CU 1 in the aforementioned scenarios, but the present disclosure is not limited to this, it depends on its role in the IAB network.

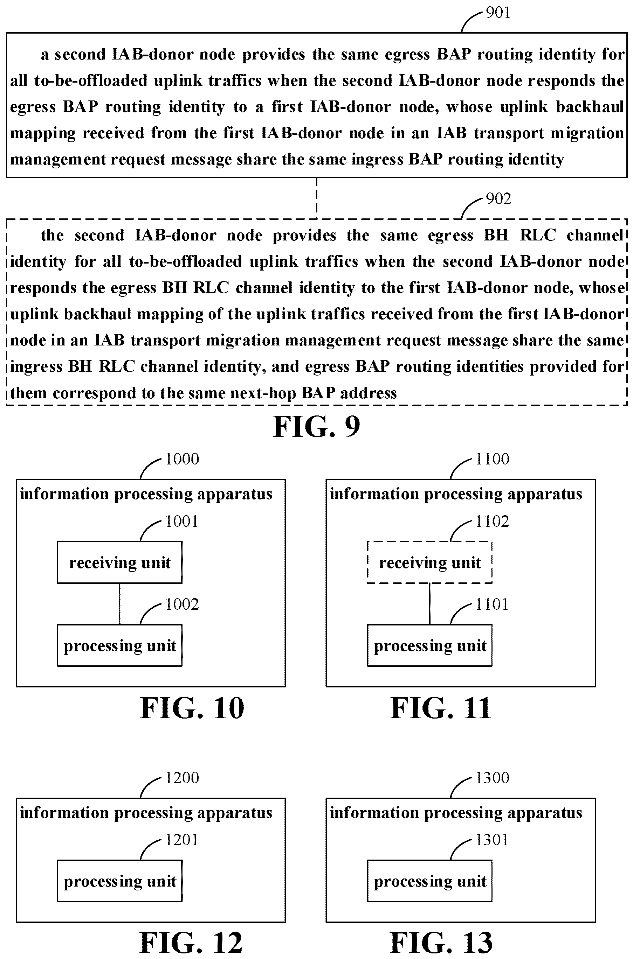

FIG. 9 is a schematic diagram of an information processing method in the embodiments of the present disclosure. As shown in FIG. 9, the method includes:
901: a second IAB-donor node provides the same egress BAP routing identity for all to-be-offloaded uplink traffics when the second IAB-donor node responds the egress BAP routing identity to a first IAB-donor node, whose uplink backhaul mapping received from the first IAB-donor node in an IAB transport migration management request message share the same ingress BAP routing identity.

According to the above embodiment, for selection of the egress BAP routing identity, a target IAB-donor-CU (the second IAB-donor node) provides (selects) the same egress BAP routing identity for all to-be-offloaded uplink traffics, whose uplink backhaul mapping received from a source IAB-donor-CU (the first IAB-donor node) in an IAB TRANSPORT MIGRATION MANAGEMENT REQUEST message share the same ingress BAP routing identity. Thereby, occurrence of 1:N configuration in the BAP header rewriting configuration is avoided.

In some embodiments, as shown in FIG. 9, the method further includes:
902: the second IAB-donor node provides the same egress BH RLC channel identity for all to-be-offloaded uplink traffics when the second IAB-donor node responds the egress BH RLC channel identity to the first IAB-donor node, whose uplink backhaul mapping of the uplink traffics received from the first IAB-donor node in an IAB transport migration management request message share the same ingress BH RLC channel identity, and egress BAP routing identities provided for them correspond to the same next-hop BAP address.

According to the above embodiment, for selection of an egress BH RLC channel, a target IAB-donor-CU (the second IAB-donor node) provides the same egress BH RLC channel identity for all to-be-offloaded uplink traffics, whose uplink backhaul mapping of the uplink traffics received from a source IAB-donor-CU (the first IAB-donor node) in an IAB TRANSPORT MIGRATION MANAGEMENT REQUEST message share the same ingress BH RLC channel identity, and egress BAP routing identities provided for them correspond to the same next-hop BAP address. Thereby, occurrence of 1:N configuration in the BH RCL channel mapping configuration is avoided.

In the above embodiments, for selection of the egress BAP routing identity and selection of the egress BH RLC channel, a target IAB-donor-CU (the second IAB-donor node) provides the same egress BAP routing identity and the same egress BH RLC channel identity for all to-be-offloaded uplink traffics, whose uplink backhaul mapping of the uplink traffics received from a source IAB-donor-CU (the first IAB-donor node) in an IAB TRANSPORT MIGRATION MANAGEMENT REQUEST message share the same ingress BAP routing identity and the same ingress BH RLC channel identity. Thereby, occurrence of 1:N configuration in the BAP header rewrite configuration and the BH RCL channel mapping configuration is avoided.

It should be noted that the above FIG. 9 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 9. For example, steps 901 and 902 may be executed simultaneously, or step 902 may be executed before step 901, and so on.

In each of the above embodiments, the second IAB-donor node may provide an egress BAP routing identity and an egress BH RLC channel identity to the first IAB-donor node via an IAB TRANSPORT MIGRATION MANAGEMENT RESPONSE message in XnAP signaling. Furthermore, the second IAB-donor node may further provide the first IAB-donor node with Layer 2 Backhaul Information such as the next-hop BAP address via the IAB TRANSPORT MIGRATION MANAGEMENT RESPONSE message in the XnAP signaling.

In each of the above embodiments, the egress BAP routing identity and the egress BH RLC channel identity may be used for uplink traffic offloading of a descendant IAB-node of a boundary IAB-node. Definitions of the boundary IAB-node and the descendant IAB-node have been described in the preceding text, and are not repeated here.

The following table is another example of enhancing the inter-donor topology adaptation process for a descendant IAB-node in TS38.401 according to the method in the above embodiments, that is, the inter-donor topology adaptation process for a descendant IAB-node in TS38.401 may have the following description:

| |
|---|
| The target IAB-donor-CU should provide the same Egress BAP Routing ID for all to-be-offloaded uplink traffic, whose UL BH mappings received from the source IAB-donor-CU in step 1 share the same Ingress BAP Routing ID. |
| The target IAB-donor-CU should provide the same Egress BH RLC CH ID for all to-be-offloaded uplink traffic, whose UL BH mappings received from the source IAB-donor-CU in step 1 share the same Ingress BAP Routing ID and same Ingress BH RLC CH ID. |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, occurrence of 1:N configuration in the BAP header rewrite configuration and the BH RCL channel mapping configuration is avoided, and the network performance is improved.

### Embodiments of a fifth aspect

Embodiments of the present disclosure provide an information processing apparatus.

FIG. 10 is a schematic diagram of an information processing apparatus in the embodiments of the present disclosure. The apparatus e.g. may be an IAB-node in an IAB network, or may be a component or component(s) or assemblies configured in the IAB-node. The principle of the apparatus to solve the problem is same as the method in the embodiments of the first aspect, thus for its specific implementation, the implementation of the method in the embodiments of the first aspect may be referred to, the same contents will not be repeated.

As shown in FIG. 10, the information processing apparatus 1000 comprises:
a receiving unit 1001 configured to receive BAP configuration information; and
a processing unit 1002 configured to use the BAP configuration information in topology of an IAB-donor-CU generating the BAP configuration information if the BAP configuration information is configured to be setup or if the BAP configuration information includes a BAP address.

In some embodiments, if the BAP configuration information includes the BAP address, the processing unit 1002 configures the BAP address as a BAP address used by a BAP entity of the IAB-node, and uses the BAP address in topology of an IAB-donor-CU that generates the BAP configuration information.

In some embodiments, the BAP configuration information is included in an RRC reconfiguration message.

In some embodiments, the IAB-node is a boundary IAB-node, i.e., an IAB-node with an RRC interface and an F1 interface terminated to different IAB-donor-CUs.

In some embodiments, the receiving unit 1001 further receives cell group configuration information, the cell group configuration information including a BAP address; the processing unit 1002 designates the BAP address as a BAP address of a parent node of the IAB-node, and the BAP address is configured by an IAB-donor-CU that configures the cell group.

In the above embodiments, the cell group configuration information may be included in an RRC reconfiguration message.

In the above embodiments, the parent node of the IAB-node is a boundary IAB-node, i.e., an IAB-node with an RRC interface and an F1 interface terminated to different IAB-donor-CUs.

In some embodiments, the receiving unit 1001 further receives backhaul routing configuration information, the backhaul routing configuration information indicating a BAP address of a next-hop node, the BAP address of the next-hop node being a BAP address used in the same topology as the IAB-node.

In the above embodiments, the backhaul routing configuration information may be included in F1AP signaling.

In the above embodiments, the next-hop node is a boundary IAB-node, i.e., an IAB-node with an RRC interface and an F1 interface terminated to different IAB-donor-CUs.

In the above embodiments, a specific meaning of the boundary IAB-node has been described in the embodiments of the first aspect, and is not repeated here.

FIG. 11 is another schematic diagram of an information processing apparatus in the embodiments of the present disclosure. The apparatus e.g. may be an IAB-node in an IAB network, or may be a component or component(s) or assemblies configured in the IAB-node. The principle of the apparatus to solve the problem is same as the method in the embodiments of the second aspect, thus for its specific implementation, the implementation of the method in the embodiments of the second aspect may be referred to, the same contents will not be repeated.

As shown in FIG. 11, the information processing apparatus 1100 comprises:
a processing unit 1101 configured to release a BAP address and/or an IP address when an IAB-node completes handover.

In some embodiments, as shown in FIG. 11, the apparatus 1100 further comprises:
a receiving unit 1102 configured to receive BAP configuration information; the processing unit releases 1101 a BAP address configured by a source IAB-donor-CU if the BAP configuration information is caused by performing handover from a non-F1-terminating IAB-donor-CU.

In the above embodiments, if the BAP configuration information includes a BAP address, the processing unit 1101 takes the BAP address as a BAP address of the IAB-node.

In some embodiments, the BAP configuration information is included in an RRC reconfiguration message.

In some embodiments, the handover is one of the following:
handover from a non-F1-terminating IAB-donor-CU to an F1-terminating IAB-donor-CU; or
handover from a non-F1-terminating IAB-donor-CU to another non-F1-terminating IAB-donor-CU.

In some embodiments, if the IAB-node is handed over from a non-F1-terminating IAB-donor-CU to an F1-terminating IAB-donor-CU, the processing unit 1101 releases a BAP address and/or an IP address configured by the non-F1-terminating IAB-donor-CU.

In some embodiments, if the IAB-node is handed over from a non-F1-terminating IAB-donor-CU to another non-F1-terminating IAB-donor-CU, the processing unit 1101 releases a BAP address and/or an IP address configured by the source IAB-donor-CU.

In some embodiments, the IAB-node releases one or more BAP configurations (bap-Config) and/or one or more IAB other configurations (IABOtherInformation) configured by an original non-F1-terminating IAB-donor-CU.

FIG. 12 is a further schematic diagram of an information processing apparatus in the embodiments of the present disclosure. The apparatus e.g. may be a descendant IAB-node of a boundary IAB-node in an IAB network, or may be a component or component(s) or assemblies configured in the descendant IAB-node. The principle of the apparatus to solve the problem is same as the method in the embodiments of the third aspect, thus for its specific implementation, the implementation of the method in the embodiments of the third aspect may be referred to, the same contents will not be repeated.

As shown in FIG. 12, the information processing apparatus 1200 comprises:
a processing unit 1201 configured to select an IP address for to-be-offloaded uplink traffic, the IP address satisfying the following conditions that:
the IP address is anchored at an IAB-donor-DU whose BAP address is contained in the BAP routing identity of uplink mapping for the uplink traffic; and
the IP address is configured by an F1-terminating IAB-donor-CU, and the F1-terminating IAB-donor-CU obtains the IP address from a non-F1-terminating IAB-donor-CU.

In some embodiments, the boundary IAB-node is an IAB-node with an RRC interface and an F1 interface terminated to different IAB-donor-CUs; and the descendant IAB-node is a node that accesses to a network via the boundary IAB-node. Its specific meaning has been described in the embodiments of the first aspect, and is not repeated here.

In some embodiments, the F1-terminating IAB-donor node of the descendant IAB-node performs uplink traffic mapping configuration on the descendant IAB-node, the uplink traffic mapping configuration including a BAP routing identity used by each uplink traffic, a BAP address included in the BAP routing identity being a destination address of the uplink traffic.

FIG. 13 is another schematic diagram of an information processing apparatus in the embodiments of the present disclosure. The apparatus e.g. may be a second IAB-donor node in an IAB network, or may be a component or component(s) or assemblies configured in the second IAB-donor node. The principle of the apparatus to solve the problem is same as the method in the embodiments of the fourth aspect, thus for its specific implementation, the implementation of the method in the embodiments of the fourth aspect may be referred to, the same contents will not be repeated.

As shown in FIG. 13, the information processing apparatus 1300 comprises:
a processing unit 1301 configured to provide the same egress BAP routing identity for all to-be-offloaded uplink traffics when the second IAB-donor node responds the egress BAP routing identity to a first IAB-donor node, whose uplink backhaul mapping of the uplink traffics received from the first IAB-donor node in an IAB transport migration management request message share the same ingress BAP routing identity.

In some embodiments, the processing unit 1301 provides the same egress BH RLC channel identity for all to-be-offloaded uplink traffics when the second IAB-donor node responds the egress BH RLC channel identity to the first IAB-donor node, whose uplink backhaul mapping of the uplink traffics received from the first IAB-donor node in an IAB transport migration management request message share the same ingress BH RLC channel identity, and egress BAP routing identities provided for them correspond to the same next-hop BAP address.

In each of the above embodiments, the second IAB-donor node may provide the first IAB-donor node with the egress BAP routing identity and the egress BH RLC channel identity via an IAB transport migration management response message in XnAP signaling.

In each of the above embodiments, the egress BAP routing identity and the egress BH RLC channel identity are used for uplink traffic offloading of a descendant IAB-node of a boundary IAB-node.

In the above embodiments, the boundary IAB-node is an IAB-node with an RRC interface and an F1 interface terminated to different IAB-donor-CUs; and the descendant IAB-node is a node that accesses to a network via the boundary IAB-node. Its specific meaning has been described in the embodiments of the first aspect, and is not repeated here.

It's worth noting that the above only describes components or modules related to the present disclosure, but the present disclosure is not limited to this. The information processing apparatuses 1000, 1100, 1200, 1300 in the embodiments of the present disclosure may further comprise other components or modules. For detailed contents of these components or modules, relevant technologies can be referred to.

Moreover, for the sake of simplicity, FIG. 10 to FIG. 13 only exemplarily show a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

According to the apparatuses in the embodiments of the present disclosure, problems related to BAP address configuration, address release, address selection, routing selection, BH RLC channel configuration, etc. are solved, thereby supporting inter-donor migration and topology redundancy of an IAB-node.

### Embodiments of a sixth aspect

Embodiments of the present disclosure provide an IAB communication system, comprising an IAB-node and an IAB-donor node, the IAB-node is configured to perform the method described in the embodiments of any one of the first to third aspects, and the IAB-donor node is configured to perform the method described in the embodiments of the fourth aspect. Specific types of the IAB-node and the IAB-donor node in the IAB communication system (a boundary IAB-node, a descendant IAB-node, a migrating IAB-node, a second IAB-donor node, etc.) as well as their behaviors have been described in detail in the embodiments of the first to fourth aspects, whose contents are incorporated here and will not be repeated here.

Embodiments of the present disclosure further provide an IAB-node, comprising a memory and a processor, the memory storing a computer program, and the processor being configured to perform the computer program to implement the method described in the embodiments of any one of the first to third aspects.

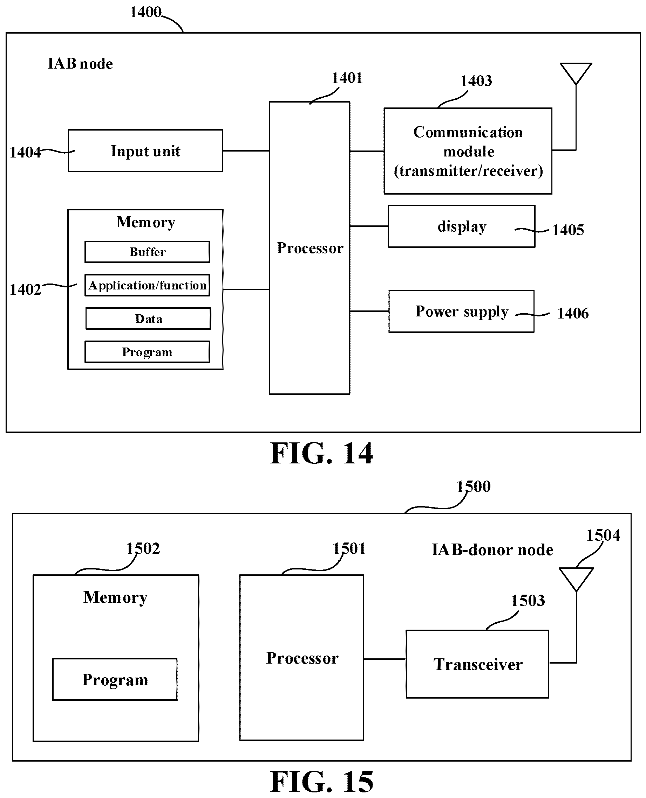

FIG. 14 is a schematic diagram of an IAB-node in the embodiments of the present disclosure. As shown in FIG. 14, the IAB-node 1400 may comprise a processor 1401 and a memory 1402; the memory 1402 stores data and programs, and is coupled to the processor 1401. It's worth noting that this figure is exemplary; other types of structures may also be used to supplement or replace this structure, so as to realize a telecommunication function or other functions.

For example, the processor 1401 may be configured to execute a program to implement the method described in the embodiments of any one of the first to third aspects.

As shown in FIG. 14, the IAB-node 1400 may further comprise: a communication module 1403, an input unit 1404, a display 1405 and a power supply 1406. The functions of said components are similar to prior arts, which are not repeated here. It's worth noting that the IAB-node 1400 does not have to include all the components shown in FIG. 14, said components are not indispensable. Moreover, the IAB-node 1400 may further include components not shown in FIG. 14, prior arts may be referred to.

Embodiments of the present disclosure further provide an IAB-donor node, comprising a memory and a processor, the memory storing a computer program, and the processor being configured to perform the computer program to implement the method described in the embodiments of the fourth aspect.

FIG. 15 is a schematic diagram of an IAB-donor node in the embodiments of the present disclosure. As shown in FIG. 15, the IAB-donor node 1500 may comprise: a central processing unit (CPU)1501 and a memory 1502; the memory 1502 is coupled to the central processing unit 1501. The memory 1502 may store various data; moreover, also stores a program for information processing, and executes the program under the control of the processor 1501, so as to receive various information transmitted by the an IAB-node and transmit various information to the IAB-node.

For example, the processor 1501 may be configured to execute a program to implement the method as described in the embodiments of the fourth aspect.

In addition, as shown in FIG. 15, the IAB-donor node 1500 may further include: a transceiver 1503 and an antenna 1504, etc.; wherein the functions of said components are similar to relevant arts, which are not repeated here. It's worth noting that the IAB-donor node 1500 does not have to include all the components shown in FIG. 15. Moreover, the IAB-donor node 1500 may further include components not shown in FIG. 15, prior arts may be referred to.

Embodiments of the present disclosure further provide a computer readable program, wherein when the program is executed in an IAB-node, the program enables a computer to execute the method as described in the embodiments of any one of the first to third aspects, in the IAB-node.

Embodiments of the present disclosure further provide a storage medium in which a computer readable program is stored, wherein the computer readable program enables a computer to execute the method as described in the embodiments of any one of the first to third aspects, in the IAB-node.

Embodiments of the present disclosure further provide a computer readable program, wherein when the program is executed in an IAB-donor node, the program enables a computer to execute the method as described in the embodiments of the fourth aspect, in the IAB-donor node.

Embodiments of the present disclosure further provide a storage medium in which a computer readable program is stored, wherein the computer readable program enables a computer to execute the method as described in the embodiments of the fourth aspect, in an IAB-donor node.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. An information processing method, applied in an IAB-node in an IAB network, wherein the method includes:
   the IAB-node receives BAP configuration information; and
   the IAB-node uses the BAP configuration information in topology of an IAB-donor-CU generating the BAP configuration information if the BAP configuration information is configured to be setup or if the BAP configuration information includes a BAP address.
2. The method according to Supplement 1, wherein
   if the BAP configuration information includes the BAP address, the IAB-node configures the BAP address as a BAP address used by a BAP entity of the IAB-node; and
   the IAB-node uses the BAP address in the topology of the IAB-donor-CU generating the BAP configuration information.
3. The method according to Supplement 1, wherein
   the BAP configuration information is included in an RRC reconfiguration message.
4. The method according to any one of Supplements 1 to 3, wherein
   the IAB-node is an IAB-node with an RRC interface and an F1 interface terminated to different IAB-donor-CUs.
5. The method according to Supplement 1, wherein the method further includes:
   the IAB-node receives cell group configuration information, the cell group configuration information including a BAP address; and
   the IAB-node designates the BAP address as a BAP address of a parent node of the IAB-node, and the BAP address is configured by an IAB-donor-CU configuring the cell group.
6. The method according to Supplement 5, wherein
   the cell group configuration information is included in an RRC reconfiguration message.
7. The method according to Supplement 5, wherein
   the parent node of the IAB-node is an IAB-node with an RRC interface and an F1 interface terminated to different IAB-donor-CUs.
8. The method according to Supplement 1, wherein the method further includes:
   the IAB-node receives backhaul routing configuration information, the backhaul routing configuration information indicating a BAP address of a next-hop node;
   the BAP address of the next-hop node being a BAP address used in the same topology as the IAB-node.
9. The method according to Supplement 8, wherein
   the backhaul routing configuration information is included in F1AP signaling.
10. The method according to Supplement 8, wherein
   the next-hop node is an IAB-node with an RRC interface and an F1 interface terminated to different IAB-donor-CUs.
11. An information processing method, applied in an IAB-node in an IAB network, wherein the method includes:
   the IAB-node releases a BAP address and/or an IP address when handover is completed.
12. The method according to Supplement 11, wherein the method includes:
   the IAB-node receives BAP configuration information; and
   the IAB-node releases a BAP address configured by a source IAB-donor-CU if the BAP configuration information is caused by performing handover from a non-F1-terminating IAB-donor-CU.
13. The method according to Supplement 12, wherein
   if the BAP configuration information includes a BAP address, the IAB-node takes the BAP address as a BAP address of the IAB-node.
14. The method according to Supplement 12, wherein
   the BAP configuration information is included in an RRC reconfiguration message.
15. The method according to Supplement 12, wherein the handover is one of the following:
   handover from a non-F1-terminating IAB-donor-CU to an F1-terminating IAB-donor-CU; or
   handover from a non-F1-terminating IAB-donor-CU to another non-F1-terminating IAB-donor-CU.
16. The method according to Supplement 11, wherein the method includes:
   if the IAB-node is handed over from a non-F1-terminating IAB-donor-CU to an F1-terminating IAB-donor-CU, the IAB-node releases a BAP address and/or an IP address configured by the non-F1-terminating IAB-donor-CU.
17. The method according to Supplement 11, wherein the method includes:
   if the IAB-node is handed over from a non-F1-terminating IAB-donor-CU to another non-F1-terminating IAB-donor-CU, the IAB-node releases a BAP address and/or an IP address configured by a source IAB-donor-CU.
17a. The method according to Supplement 11, wherein the method includes:
   the IAB-node releases BAP configuration and/or IAB other configuration (IABOtherInformation) configured by an original non-F1-terminating IAB-donor-CU.
18. An information processing method, applied in a descendant IAB-node of a boundary IAB-node in an IAB network, wherein the method includes:
   the descendant IAB-node selects an IP address for to-be-offloaded uplink traffic, the IP address satisfying the following conditions that:
   the IP address is anchored at an IAB-donor-DU whose BAP address is contained in the BAP routing identity of the uplink mapping for the uplink traffic; and
   the IP address is configured by an F1-terminating IAB-donor-CU, and the F1-terminating IAB-donor-CU obtains the IP address from a non-F1-terminating IAB-donor-CU.
19. The method according to Supplement 18, wherein
   the boundary IAB-node is an IAB-node with an RRC interface and an F1 interface terminated to different IAB-donor-CUs; and
   the descendant IAB-node is a node accessing to a network via the boundary IAB-node.
20. The method according to Supplement 18, wherein the method further includes:
   the F1-terminating IAB-donor node of the descendant IAB-node performs uplink traffic mapping configuration on the descendant IAB-node, the uplink traffic mapping configuration including a BAP routing identity used by each uplink traffic, a BAP address included in the BAP routing identity being a destination address of the uplink traffic.
21. An information processing method, applied in a second IAB-donor node in an IAB network, wherein the method includes:
   the second IAB-donor node provides the same egress BAP routing identity for all to-be-offloaded uplink traffics when the second IAB-donor node responds the egress BAP routing identity to a first IAB-donor node, whose uplink backhaul mapping received from the first IAB-donor node in an IAB transport migration management request message share the same ingress BAP routing identity.
22. The method according to Supplement 21, wherein the method further includes:
   the second IAB-donor node provides the same egress BH RLC channel identity for all to-be-offloaded uplink traffics when the second IAB-donor node responds the egress BH RLC channel identity to the first IAB-donor node, whose uplink backhaul mapping received from the first IAB-donor node in an IAB transport migration management request message share the same ingress BAP routing identity and the same ingress BH RLC channel identity.
23. The method according to Supplement 21 or 22, wherein
   the second IAB-donor node provides the first IAB-donor node with the egress BAP routing identity and the egress BH RLC channel identity via an IAB transport migration management response message in XnAP signaling.
24. The method according to Supplement 21 or 22, wherein
   the egress BAP routing identity and the egress BH RLC channel identity are used for uplink traffic offloading of a descendant IAB-node of a boundary IAB-node.
25. The method according to Supplement 24, wherein
   the boundary IAB-node is an IAB-node with an RRC interface and an F1 interface terminated to different IAB-donor-CUs; and
   the descendant IAB-node is a node accessing to a network via the boundary IAB-node.
26. An IAB-node, comprising a memory and a processor, the memory storing a computer program, and the processor being configured to execute the computer program to achieve the method according to any one of the supplements 1 to 20.
27. An IAB-donor node, comprising a memory and a processor, the memory storing a computer program, and the processor being configured to execute the computer program to achieve the method according to any one of the supplements 21 to 25.
28. An IAB communication system, comprising an IAB-node and an IAB-donor node, the IAB-node is configured to execute the method according to any one of Supplements 1 to 20, and the IAB-donor node is configured to execute the method according to any one of Supplements 21 to 25.

## Claims

1. An information processing apparatus, configured in an IAB-node in an integrated access and backhaul (IAB) network, wherein the apparatus comprises:
a receiving unit configured to receive backhaul adaptation protocol (BAP) configuration information; and
a processing unit configured to use the BAP configuration information in topology of an IAB donor central unit (IAB-donor-CU) generating the BAP configuration information if the BAP configuration information is configured to be setup or if the BAP configuration information includes a BAP address.

2. The apparatus according to claim 1, wherein,
if the BAP configuration information includes the BAP address, the processing unit configures the BAP address as a BAP address used by a BAP entity of the IAB-node;
and the processing unit uses the BAP address in the topology of the IAB-donor-CU generating the BAP configuration information.

3. The apparatus according to claim 1, wherein,
the BAP configuration information is included in a radio resource control (RRC) reconfiguration message.

4. The apparatus according to claim 1, wherein,
the IAB-node is an IAB-node with an RRC interface and an F1 interface terminated to different IAB-donor-CUs.

5. The apparatus according to claim 1, wherein,
the receiving unit further receives cell group configuration information, the cell group configuration information including a BAP address;
and the processing unit designates the BAP address as a BAP address of a parent node of the IAB-node, and the BAP address is configured by an IAB-donor-CU configuring the cell group.

6. The apparatus according to claim 5, wherein,
the cell group configuration information is included in an RRC reconfiguration message.

7. The apparatus according to claim 5, wherein,
the parent node of the IAB-node is an IAB-node with an RRC interface and an F1 interface terminated to different IAB-donor-CUs.

8. The apparatus according to claim 1, wherein,
the receiving unit further receives backhaul routing configuration information, the backhaul routing configuration information indicating a BAP address of a next hop of node,
the BAP address of the next hop of node being a BAP address used in the same topology as the IAB-node.

9. The apparatus according to claim 8, wherein,
the backhaul routing configuration information is included in F1 application protocol (F1AP) signaling.

10. The apparatus according to claim 8, wherein,
the next hop of node is an IAB-node with an RRC interface and an F1 interface terminated to different IAB-donor-CUs.

11. An information processing apparatus, configured in an IAB-node in an IAB network, wherein the apparatus comprises:
a processing unit configured to release a BAP address and/or an IP address when the IAB-node completes handover.

12. The apparatus according to claim 11, wherein the apparatus comprises:
a receiving unit configured to receive BAP configuration information;
and the processing unit releases a BAP address configured by a source IAB-donor-CU if the BAP configuration information is caused by performing handover from a non-F1 terminating IAB-donor-CU.

13. The apparatus according to claim 12, wherein,
if the BAP configuration information includes a BAP address, the processing unit takes the BAP address as a BAP address of the IAB-node.

14. The apparatus according to claim 12, wherein,
the BAP configuration information is included in an RRC reconfiguration message.

15. The apparatus according to claim 12, wherein the handover is one of the following:
handover from a non-F1 terminating IAB-donor-CU to an F1 terminating IAB-donor-CU; or
handover from a non-F1 terminating IAB-donor-CU to another non-F1 terminating IAB-donor-CU.

16. The apparatus according to claim 11, wherein,
if the IAB-node is handed over from a non-F1 terminating IAB-donor-CU to an F1 terminating IAB-donor-CU, the processing unit releases a BAP address and/or an IP address configured by the non-F1 terminating IAB-donor-CU.

17. The apparatus according to claim 11, wherein,
if the IAB-node is handed over from a non-F1 terminating IAB-donor-CU to another non-F1 terminating IAB-donor-CU, the processing unit releases a BAP address and/or an IP address configured by a source IAB-donor-CU.

18. An information processing apparatus, configured in a descendant IAB-node of a boundary IAB-node in an IAB network, wherein the apparatus comprises:
a processing unit configured to select an IP address for to-be-offloaded uplink traffic, the IP address satisfying the following conditions that:
the IP address is anchored at an IAB donor distributed unit (IAB-donor-DU) whose BAP address is contained in the BAP routing identifier of the uplink mapping for the uplink traffic; and
the IP address is configured by an F1 terminating IAB-donor-CU, and the F1 terminating IAB-donor-CU obtains the IP address from a non-F1 terminating IAB-donor-CU.

19. The apparatus according to claim 18, wherein,
the boundary IAB-node is an IAB-node with an RRC interface and an F1 interface terminated to different IAB-donor-CUs;
and the descendant IAB-node is a node accessing to a network via the boundary IAB-node.

20. The apparatus according to claim 18, wherein,
the F1 terminating IAB-donor node of the descendant IAB-node performs uplink traffic mapping configuration for the descendant IAB-node, the uplink traffic configuration including a BAP routing identifier used by each uplink traffic, a BAP address included in the BAP routing identifier being a destination address of the uplink traffic.
